# EUROPÄISCHE PATENTANMELDUNG

(11) **EP 1 814 203 A1**
(43) Veröffentlichungstag der Anmeldung: **01.08.2007**
(21) Anmeldenummer: 06026669.9
(22) Anmeldetag: 22.12.2006
(51) Int. Cl.: H02B 1/01

(54) **Rahmengestell für einen Schalt- oder/und Verteilerschrank**

(30) Priorität: 25.01.2006 DE 102006003770
(71) Anmelder: Hager Electro GmbH & Co. KG, 66131 Saarbrücken (DE)
(72) Erfinder: Chrim, Mahmoud, 33074 Fontanafredda/Pordenone (IT); Cubela, Tomislav, 6300 Zug (CH); Christen, Reto, 6012 Obernau (CH)
(74) Vertreter: Bernhardt, Reinold

(57) **Zusammenfassung**

Die Erfindung betrifft ein Rahmengestell für einen Schalt- oder/und Verteilerschrank mit vertikalen und horizontalen, in den Ecken des Schrankinnenraums angeordneten Rahmenprofilen (1-3) sowie Stücken (7) zur Verbindung jeweils drei zueinander senkrechter Rahmenprofile (1-3) an ihren Enden, wobei ein dem Schrankinnenraum zugewandter Abschnitt (33) der Wand der Rahmenprofile (1-3) gegenüber einem entsprechenden Profil mit quadratischem Querschnitt wenigstens teilweise in Richtung zur Ecke (34) des Schrankinnenraums hin zurückversetzt ist. Gemäß der Erfindung mündet in einem infolge der Zurückversetzung freiliegenden, dem Schrankinnenraum zugewandten Oberflächenabschnitt (24) des Verbindungsstücks (7) eine durch das Verbindungsstück (7) hindurch führende Bohrung (27) aus. Vorzugsweise verläuft die Durchgangsbohrung (27) durch einen an dem genannten Oberflächenabschnitt 24 gebildeten, jeweils über die Querschnittskontur der drei verbundenen Rahmenprofile (1 bis 3) hinaus vorstehenden Ansatz (26) hindurch.

## Beschreibung

Die Erfindung betrifft ein Rahmengestell für einen Schalt- oder/und Verteilerschrank, mit vertikalen und horizontalen, in den Ecken des Schrankinnenraums angeordneten Rahmenprofilen sowie Stücken zur Verbindung jeweils drei zueinander senkrechter Rahmenprofile an ihren Enden, wobei ein dem Schrankinnenraum zugewandter Abschnitt der Wand der Rahmenprofile gegenüber einem entsprechenden Profil mit quadratischem Querschnitt wenigstens teilweise in Richtung zur Ecke des Schrankinnenraums hin zurückversetzt ist.

Der Erfindung liegt die Aufgabe zugrunde, ein neues Rahmengestell zu schaffen, welches die Montage von Schalt- oder/und Verteilerschränken erleichtert.

Das diese Aufgabe lösende Rahmengestell nach der Erfindung ist dadurch gekennzeichnet, dass in einer infolge der Rückversetzung freiliegenden, dem Schrankinnenraum zugewandten Oberflächenabschnitt des Verbindungsstücks eine durch eines Verbindungsstück hindurchführende Bohrung ausmündet.

Vorteilhaft lässt sich eine solche Bohrung für eine Schraubverbindung des Rahmengestells mit einem Trägersockel oder einem Rahmengestell eines benachbarten Schalt- oder/und Verteilerschranks nutzen. Insbesondere erleichtert die vom Schrankinnenraum her zugängliche Durchgangsbohrung die Montage.

In einer bevorzugten Ausführungsform der Erfindung verläuft die Durchgangsbohrung durch einen an dem genannten Oberflächen gebildeten, jeweils über die Querschnittskontur der drei verbundenen Rahmenprofile hinaus vorstehenden Ansatz hindurch. Vorteilhaft bildet der Ansatz eine die Festigkeit der Schraubverbindung erhöhenden Materialverstärkung.

Vorzugsweise liegt der Ansatz, in Richtung der Längsachse von wenigstens einem der drei Rahmenprofile gesehen, innerhalb der Kontur des genannten quadratischen Profilquerschnitts. Vorteilhaft ragt der Ansatz nicht weit in den Innenraum des Schranks hinein und benötigt keinen für Verdrahtungen oder Einbauten vorgesehenen Platz.

Vorzugsweise schließt der Oberflächenabschnitt eines Verbindungsstücks, von dem ggf. gebildeten Ansatz abgesehen, bündig an die Oberflächen der miteinander verbundenen Rahmenprofile an. Das Verbindungsstück ragt somit nicht in den Innenraum des Verteilerschranks hinein, füllt aber die durch zwischen den drei zusammenlaufenden Rahmenprofilen gebildete Lücke vollständig aus.

Vorzugsweise münden die Durchgangsbohrungen in einem zu einer der Wände des Verteilerschranks parallelen Teilfläche des Oberflächenabschnitts aus. Gegen eine solche Teilfläche kann sich ein Schraubenkopf rundum anlegen.

In weiterer Ausgestaltung der Erfindung münden in dem genannten Oberflächenabschnitt mehrere Durchgangsbohrungen aus, deren Achsen vorzugsweise parallel zu den Längsachsen der drei Rahmenprofile verlaufen. Mit Hilfe dreier solcher Durchgangsbohrungen kann z.B. eine Verbindung mit einem Trägersockel und zwei an verschiedenen Seiten an den Schrank angrenzenden weiteren Schränken erfolgen.

In einer bevorzugten Ausführungsform der Erfindung sind drei Durchgangsbohrungen und ein einziger Ansatz vorgesehen, wobei die Achse der durch den Ansatz hindurchgeführten Durchgangsbohrung vertikal verläuft. Die durch den Ansatz geführte Durchgangsbohrung kann zur Verbindung mit einem Trägersockel dienen, während mit Hilfe der beiden übrigen Durchgangsbohrungen Schraubverbindungen zu Rahmengestellen benachbarter Schalt- oder/und Verteilerschränke möglich sind.

Die Erfindung wird nachfolgend anhand von Ausführungsbeispielen und der beiliegenden, sich auf diese Ausführungsbeispiele beziehenden Zeichnungen näher erläutert. Es zeigen:

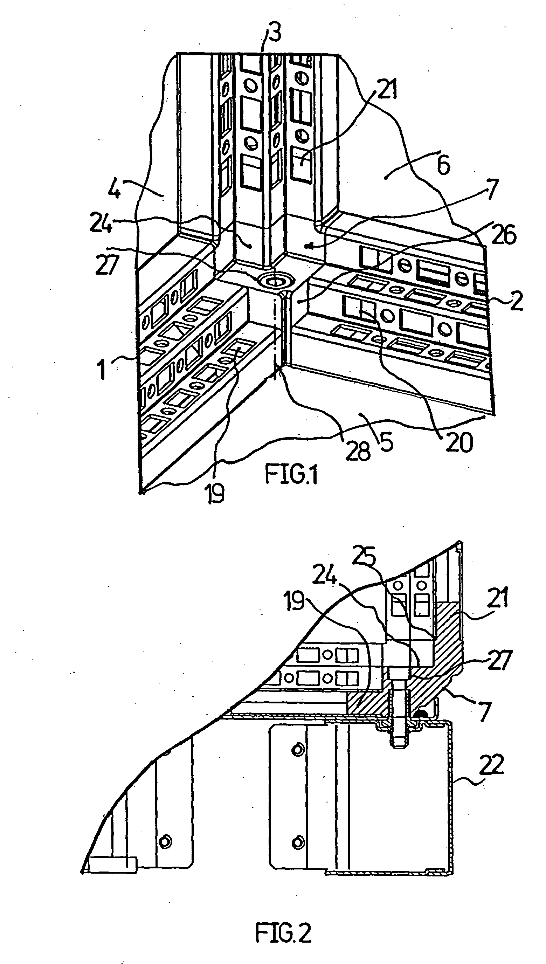

- Fig. 1: ein Rahmengestell für einen Schalt- oder/und Verteilerschrank nach der Erfindung in einer perspektivischen Teilansicht,
- Fig. 2: das Rahmengestell von Fig. 1 in einer geschnittenen Teilansicht,
- Fig. 3: eine Teilansicht des Rahmengestells von Fig. 1 in einer geschnittenen Draufsicht, und
- Fig. 4: ein weiteres Ausführungsbeispiel für ein erfindungsgemäßes Rahmengestell in Teilansicht.

Ein Rahmengestell für einen Schalt- oder/und Verteilerschrank weist horizontale Rahmenprofile 1 und 2 sowie vertikale Rahmenprofile 3 auf. Die in ihrer Länge entlang der Ecken des Schrankinnenraums verlaufenden, zueinander senkrechten Rahmenprofile 1 bis 3 treffen in einem durch drei Wände 4 bis 6 gebildeten Eckbereich des Schrankinnenraums zusammen und sind an ihren Enden durch ein Verbindungsstück 7 aneinander gekoppelt.

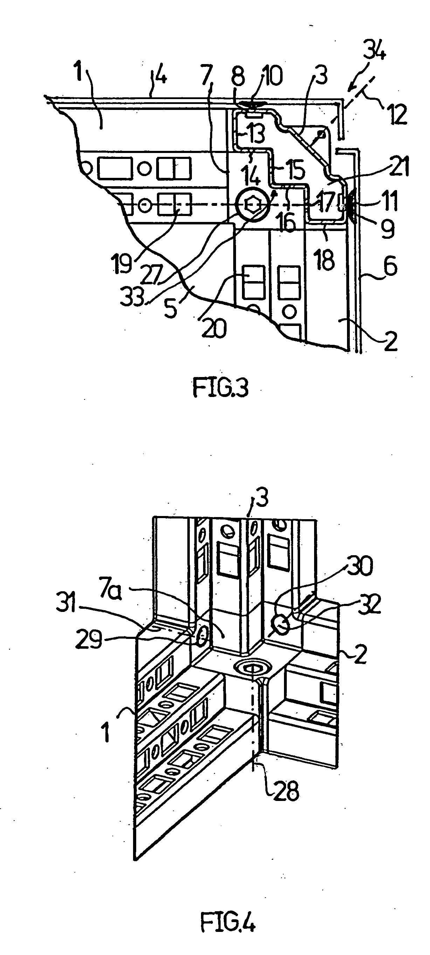

Die zur Winkelhalbierenden 12 der betreffenden Schrankecke 34 symmetrischen Rahmenprofile 1 bis 3 weisen jeweils einen Abschnitt auf, welcher einer der im Eckbereich zusammentreffenden Wänden 4 bis 6 zugewandt und zu der betreffenden Wand parallel ist. Gemäß Fig. 3 ist ein Abschnitt 8 des Rahmenprofils 3 parallel zu der Wand 4, ein Abschnitt 9 parallel zur Wand 6.

Wie Fig. 3 erkennen lässt, kann zwischen der betreffenden Wand und dem betreffenden Abschnitt eine Dichtung 10 bzw. 11 angeordnet sein.

Die der Schrankecke fernliegenden Enden der Abschnitte 8 und 9 sind durch einen jeweils zu den Abschnitten 8 und 9 um 90° abgewinkelten, dem Schrankinnenraum zugewandten Abschnitt 33 miteinander verbunden, welcher in dem gezeigten Ausführungsbeispiel aus sechs aufeinander folgend abwechselnd in entgegengesetzter Richtung um 90° abgebogenen Teilabschnitten 13 bis 18 besteht.

Das Verbindungsstück 7 weist drei Steckverbindungsabschnitte 19 bis 21 auf, deren Querschnittsfläche dem Innenquerschnitt der Rahmenprofile 1 bis 3 entspricht und über welche das Verbindungsstück 7 auf die Enden der Rahmenprofile 1 bis 3 aufsteckbar ist.

Gegenüber einem quadratischen Profil, wie es bei geradliniger Fortsetzung der Teilabschnitte 13 und 18 zum Schrankinnenraum hin entstehen würde, sind die Teilabschnitte 14 bis 17 zur Schrankecke hin zurückversetzt. Infolge dieser Rückversetzung liegt ein dem Schrankinnenraum zugewandter Oberflächenabschnitt 24 des Verbindungsstücks 7 frei. Gegenüber den Steckverbindungsabschnitten 19 bis 21 steht der freiliegende Oberflächenabschnitt 24 vor. Ein Absatz 25 zwischen den Steckverbindungsabschnitten und dem Oberflächenabschnitt entspricht der Wandstärke der Rahmenprofile, so dass der Oberflächenabschnitt 24 bündig an die Rahmenprofile anschließt und die jeweiligen angrenzenden Flächen der Rahmenprofile bis zu einer Stoßkante hin fortsetzt.

In dem gezeigten Ausführungsbeispiel erstreckt sich der bündige Anschluss des Oberflächenabschnitts 24 an die Oberflächen der zusammentreffenden Rahmenprofile 1 bis 3 nicht auf den im Bereich eines Ansatzes 26, der, in Richtung der Längsachse der drei Rahmenprofile gesehen, über die Querschnittskontur der Rahmenprofile hinaus vorsteht, jedoch innerhalb der Kontur des obengenannten quadratischen Querschnittsprofils verbleibt.

In dem Ansatz 26 ist eine durch das gesamte Verbindungsstück 7 hindurchführende Bohrung 27 gebildet, deren Bohrungsachse 28 vertikal verläuft. Die Bohrungsachse 28 lässt sich vorteilhaft zur Herstellung einer Schraubverbindung zwischen dem Rahmengestell und einem unter dem Rahmengestell angeordneten Trägersockel 22 für den Zähler- oder/und Verteilerschrank nutzen. Vorteilhaft lässt sich die Verschraubung von der Schrankinnenseite her durchführen.

Wie das Ausführungsbeispiel von Fig. 4 zeigt, könnten weitere Durchgangsbohrungen 29 und 30 in den zur Wand 4 bzw. Wand 6 parallelen Teilflächen des Oberflächenabschnitts 24 vorgesehen sein.
Ein dem Verbindungsstück 7 entsprechendes Verbindungsstück 7a weist solche Durchgangsbohrungen 29 und 30 mit zueinander und zur Bohrungsachse 28 senkrechten Bohrungsachsen 31 und 32 auf. Die Durchgangsbohrungen 29 und 30 lassen sich zur Schraubverbindung mit den Rahmengestellen weiterer Zähler- oder/und Verteilerschränke nutzen.

Auch die Durchgangsbohrungen 29 und 30 könnten durch einen dem Ansatz 26 entsprechenden Ansatz hindurch geführt sein. Zweckmäßig sind die Ansätze dann in Richtung der Bohrungsachse verkürzt, so dass genügend Freiraum für die Anordnung von Schraubenköpfen besteht.

Abweichend von den gezeigten Ausführungsbeispielen könnte der Ansatz 26 entfallen und stattdessen eine Durchgangsbohrung in einer zur Wand 5 parallelen Teilfläche des Oberflächenabschnitts 24 ausmünden.

## Patentansprüche

1. Rahmengestell für einen Schalt- oder/und Verteilerschrank, mit vertikalen und horizontalen, in den Ecken des Schrankinnenraums angeordneten Rahmenprofilen (1-3), sowie Stücken (7) zur Verbindung jeweils drei zueinander senkrechter Rahmenschenkel an ihren Enden, wobei ein dem Schrankinnenraum zugewandter Abschnitt (33) der Wand der Rahmenprofile (1-3) gegenüber einem entsprechenden Profil mit quadratischem Querschnitt wenigstens teilweise in Richtung zu der Ecke des Schrankinnenraums hin zurückversetzt ist,
**dadurch gekennzeichnet,**
**dass** in einem infolge dieser Rückversetzung freiliegenden, dem Schrankinnenraum zugewandten Oberflächenabschnitt (24) eines Verbindungsstücks (7) eine durch das Verbindungsstück (7) hindurch führende Bohrung (27) ausmündet.

2. Rahmengestell nach Anspruch 1,
**dadurch gekennzeichnet,**
**dass** die Durchgangsbohrung (27) durch einen in dem Oberflächenabschnitt (24) gebildeten, jeweils über die Querschnittskontur der drei verbundenen Rahmenprofile (1-3) hinaus vorstehenden Ansatz (26) hindurch verläuft.

3. Rahmengestell nach Anspruch 2,
**dadurch gekennzeichnet,**
**dass** der Ansatz, in Richtung der Längsachse von wenigstens einem der drei Rahmenprofile (1-3) gesehen, innerhalb der Kontur des genannten quadratischen Vergleichsprofils liegt.

4. Rahmengestell nach Anspruch 2 oder 3,
**dadurch gekennzeichnet,**
**dass** der Oberflächenabschnitt (24), von dem ggf. gebildeten Ansatz (26) abgesehen, bündig an die Oberflächen der miteinander verbundenen Rahmenprofile (3) anschließt.

5. Rahmengestell nach einem der Ansprüche 1 bis 4,
**dadurch gekennzeichnet,**
**dass** die Durchgangsbohrung (27) in einem zu einer Wände (4-6) des Verteilerschranks parallelen Teilabschnitt des Oberflächenabschnitts (24) ausmündet.

6. Rahmengestell nach einem der Ansprüche 1 bis 5,
**dadurch gekennzeichnet,**
**dass** in dem Oberflächenabschnitt (24) mehrere Durchgangsbohrungen (27;29,30) ausmünden.

7. Rahmengestell nach Anspruch 6,
**dadurch gekennzeichnet,**
**dass** die Achsen (28;31,32) der Durchgangsbohrungen (27;29,30) jeweils parallel zur Längsachse von einem der Rahmenprofile (1-3) verlaufen.

8. Rahmengestell nach Anspruch 6 oder 7,
**dadurch gekennzeichnet,**
**dass** drei Durchgangsbohrungen (27;29,30) und ein einziger Ansatz (26) vorgesehen sind, wobei die Achse (28) der durch den Ansatz führenden Durchgangsbohrung (27) vertikal verläuft.
